# EUROPEAN PATENT APPLICATION

(11) **EP 3 451 610 A1**
(43) Date of publication of application: **06.03.2019**
(21) Application number: 17306141.7
(22) Date of filing: 04.09.2017
(51) Int. Cl.: H04L 29/06, H04L 12/28, H04L 12/725, H04L 12/715

(54) **CONDITIONAL ROUTING DEVICE AND METHOD**

(71) Applicant: Thomson Licensing, 92130 Issy-les-Moulineaux (FR)
(72) Inventor: ONNO, Stéphane, 35576 Cesson Sévigné (FR); BERTOLINO, Matteo, 35576 Cesson Sévigné (FR)
(74) Representative: Ståhl, Björn Niclas

(57) **Abstract**

A Forwarder (220) in a network (200), preferably based on Information-Centric Networking (ICN), receives (S310) a first request for data, the first request comprising an identifier of requested data and a condition from a Consumer device (210) or a second Forwarder device, sends (S335) a second request for the data to a Producer device (230) or a third Forwarder device in the network (200), the second request comprising at least the identifier of the data, receives (S340) received data corresponding to requested data from the Producer device (230) or the third Forwarder device, determines (S350) whether the received data satisfy the condition and sends (S355) the requested data to the Consumer device (210) or the second Forwarder device only in case the received data satisify the condition.

## Description

### TECHNICAL FIELD

The present disclosure relates generally to network communication and in particular to communication of data in Information-Centric Networking.

### BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

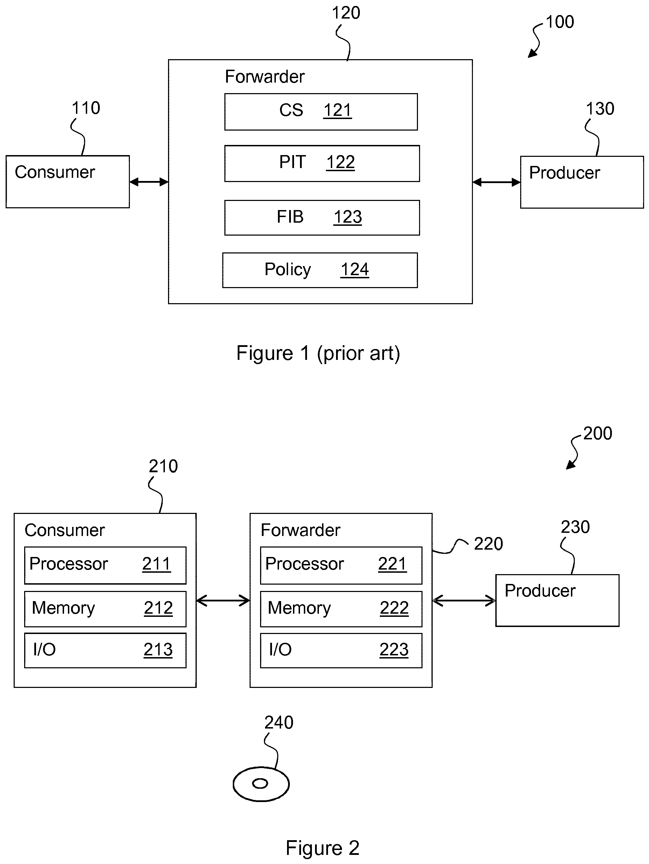

Figure 1 illustrates functionally a generic conventional Information-Centric Networking (ICN) network 100 with a requesting node ("Consumer") 110, an intermediate router node ("Forwarder") 120 and a node 130 that provides information or other kind of service ("Producer").

The Forwarder 120 includes a content store ("CS") 121, a Pending Interest Table ("PIT") 122, a Forwarding Information Base ("FIB") 123 and a Forwarding strategy module 124.

The CS 121 is a cache data, the PIT 122 stores for forwarded "Interests" that have not yet been satisfied, a data name and incoming and outgoing interfaces, the FIB 123 is a routing table that maps names to interfaces, and the forwarding strategy module is a set of policies and rules related to forwarding of packets.

In this example an "Interest packet" is a request for data, but it should be noted that in the general case, an Interest could for example also be an instruction to a Producer to perform an action.

When the Forwarder 120 receives an Interest packet (i.e. a request for data) from the Consumer 110, it can first check if the requested data is stored in the CS 121. If so, the Forwarder 120 returns the data to the Consumer 110 in a Data packet.

If the CS 121 does not store the data, it adds entries to the PIT 122 and the FIB, and routes the Interest packet to the Producer 130.

The Producer 130 generates a Data packet with the requested data and sends the Data packet to the Forwarder 120. The Forwarder 120 checks whether the PIT 122 includes a corresponding Interest. If this is not the case, then the Forwarder 120 discards the Data packet. But if the PIT 122 does store a corresponding Interest, then the PIT 122 deletes the Interest, the CS 121 stores the data, and the Data packet is sent to the Consumer 110.

However, in some cases, the Consumer 110 may request the data only in order to determine if the data satisfy a specific criterion, such as "alert user if freezer temperature is above -15 °C". This may cause unnecessary network traffic, in particular if the Consumer 110 sends Interest packets related to the data on a regular basis.

It will be appreciated that it is desired to have a solution that overcomes at least part of the conventional problems related to ICN data communication.

### SUMMARY OF DISCLOSURE

In a first aspect, the present principles are directed to a Forwarder device configured for use in a network. The Forwarder device includes at least one communication interface configured to receive a first request for data from a Consumer device or a second Forwarder device, the first request comprising an identifier of requested data and a condition, send a second request for the data to a Producer device or a third Forwarder device in the network, the second request comprising at least the identifier of the data, receive received data corresponding to the requested data from the Producer device or the third Forwarder device, and send the received data to the Consumer device or the second Forwarder device. The Forwarder device further includes at least one hardware processor configured to instruct the at least one communication interface to send the received data to the Consumer device only in case the received data satisify the condition.

Various embodiments of the first aspect include:
- That the Forwarder device further includes memory configured for storing received data, and that the at least one hardware processor is further configured to retrieve the retrieved data corresponding to the requested data from the memory if stored therein and to send the retrieved data to the Consumer device or the second Forwarder device only in case the retrieved data satisify the condition.
- That the at least one hardware processor is further configured to store the first request in the memory. The at least one hardware processor can further be configured to associate the first request with a timer and to remove the first request from the memory upon expiry of the timer.
- That the second request further comprises the condition.
- That the at least one hardware processor is further configured to send to the Consumer device, in case the received data do not satisfy the condition, a notification that the condition is not satisfied.
- That the at least one hardware processor is further configured to determine if the received data satisfy the condition only if the Forwarder device received the first request from the Consumer device.
- That the at least one hardware processor is further configured to determine if the received data satisfy the condition only if the Forwarder device sent the second request to the Producer device.

In a second aspect, the present principles are directed to a method at a Forwarder device in a network. At least one communication interface receives a first request for data from a Consumer device or a second Forwarder device, the first request comprising an identifier of requested data and a condition, sends a second request for the data to a Producer device or a third Forwarder device in the network, the second request comprising at least the identifier of the data, and receives received data corresponding to requested data from the Producer device or the third Forwarder device. At least one hardware processor determines whether the received data satisfy the condition, and the requested data is sent to the Consumer device or the second Forwarder device only in case the received data satisify the condition.

Various embodiments of the second aspect include:
- That the at least one hardware processor retrieves retrieved data corresponding to the requested data from memory if stored therein, determines whether the retrieved data satisfy the condition and sends the retrieved data to the Consumer device or the second Forwarder device only in case the retrieved data satisify the condition.
- That the at least one hardware processor stores the first request in memory.
- That the second request further comprises the condition.
- Sending a notification that the condition is not satisfied to the Consumer device, in case the received data do not satisfy the condition.

In a third aspect, the present principles are directed to a computer program comprising program code instructions executable by a processor for implementing the steps of a method according to any embodiment of the first aspect.

In a fourth aspect, the present principles are directed to a computer program product which is stored on a non-transitory computer readable medium and includes program code instructions executable by a processor for implementing the steps of a method according to any embodiment of the first aspect.

### BRIEF DESCRIPTION OF DRAWINGS

Features of the present principles will now be described, by way of nonlimiting example, with reference to the accompanying drawings, in which:
Figure 1 illustrates functionally a generic Information-Centric Networking (ICN) network;
Figure 2 illustrates an exemplary system according to an embodiment of the present principles;
Figure 3 illustrates a method of conditional data communication according to an embodiment of the present principles.

### DESCRIPTION OF EMBODIMENTS

Figure 2 illustrates a generic Information-Centric Networking (ICN) network 200 according to the present principles. For reasons of clarity, only one device of each type is illustrated, but it will be understood that the ICN network 200 can, and normally will, include further devices of each type.

As in Figure 1, the ICN network 200 includes a requesting node ("Consumer") 210, an intermediate router node ("Forwarder") 220 and a node 230 that provides information or other kind of service ("Producer").

The Producer 230 can be of the conventional type.

The Forwarder 220 includes at least some of the functional blocks illustrated in Figure 1 (but not shown in Figure 2): the content store, CS, the Forwarding Information Base, FIB, and the Forwarding strategy module. In addition, the Forwarder 220 includes a Conditional Pending Interest Table, CPIT, whose functions will be described hereinafter. The CS preferably sets a time-to-live value for each content (i.e. Data) stored and removes the content when the time-to-live value expires.

Non-limitative examples of the Consumer 210 are a personal computer, a mobile phone, a tablet, a set-top box and an alarm system. Non-limitative examples of the Forwarder 220 are a gateway in a home network and a network router.

Each of the Consumer 210 and the Forwarder 220 includes at least one hardware processing unit ("processor") 211, 221, memory 212, 222 and hardware communication interfaces 213, 223 configured for communication with other devices - the Forwarder 220 for the Consumer 210 and the Consumer 210 and the Producer 230 for the Forwarder 220. The communication interfaces 223 of the Forwarder 220 can be implemented as a single physical interface. The skilled person will appreciate that the illustrated Consumer 210 and Forwarder 220 are very simplified for reasons of clarity of illustration and that physical implementations of these devices in addition would include features such as internal connections and power supplies.

Non-transitory storage media 240 stores instructions that, when executed by a processor, perform the functions of the Forwarder 210 as further described hereinafter.

A salient feature of the present principles is the extension of the semantic of the Interests to include a condition that should be fulfilled by the Data for the Forwarder 220 to return the Data to the Consumer 210. The Forwarder 220 thus returns the Data only in case the condition is fulfilled by the Data; otherwise nothing is returned. In a variant, the Forwarder returns the Data to the Consumer 210 when the condition is fulfilled and otherwise returns a notification that the Data did not fulfil the condition.

To this end, the processor 211 of the Consumer 210 is configured to insert a condition in the Interest. As mentioned, the condition indicates the at least one circumstance under which the Data will be sent to the Consumer 210 as will be seen in greater detail hereinafter.

In addition, at the Forwarder 220, the processor 221 is configured to return Data in the CS (121 in Figure 1) only if the condition in the Interest is met. The processor 221 is also configured to add the condition for the Interest to the CPIT (122 in Figure 1) in addition to registering a prefix with the incoming request interface, i.e. the corresponding Interest. It is preferred that the processor 221 associates a countdown timer with the Interest and removes the Interest from the CPIT when the time is up. Such a countdown timer can for example be of use in case the Producer does not return any Data or, as will be described, in case of a chain of Forwarders where a Forwarder closer to the Consumer may not receive any Data if a Forwarder closer to the Producer determines that the condition is not satisfied.

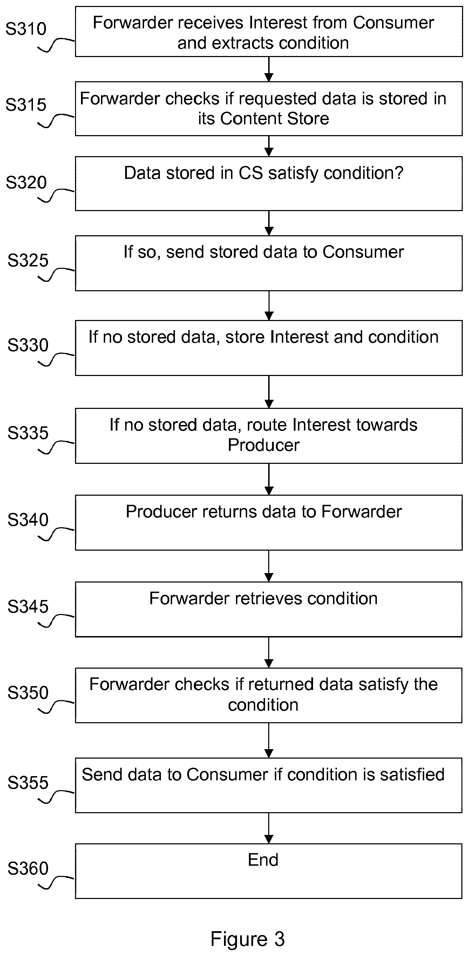

Figure 3 illustrates a method of conditional data communication according to an embodiment of the present principles.

In step S310, the processor 211 of the Consumer 210 generates and sends an Interest that includes a condition to the Forwarder 220. The Forwarder 220 then receives the Interest and extracts the condition from the Interest.

In step S315, the processor 221 of the Forwarder 220 checks if the data requested in the Interest is already stored in the CS.

If the requested data is stored in the CS, the processor 221 checks, in step S320, if the stored data satisfy the condition. In case the stored data satisfy the condition, then the stored data is sent, in step S325, to the Consumer. However, in case the stored data does not satisfy the condition, no data is sent to the Consumer and the method stops in step S360.

In case the data is not stored in the CS, the processor 221 stores the condition together with the Interest in the CPIT, in step S330, and routes the Interest to the Producer 230, in step S335. When sending to the Producer 230, the Interest can be sent without the condition, but it is also possible to leave the condition in the Interest. For each entry, the CPIT preferably inludes a prefix, a face and a condition index, where the prefix identifies the data requested in the Interest, the face identifies from where the Interest came (and where the corresponding Data should be routed) - in the present example, the requesting Consumer - and the condition index refers to an entry in a condition table. This condition table includes entries with an index (linking the condition table and the CPIT) and the condition, examples of which will be shown hereinafter. The skilled person will appreciate that it is also possible to include the condition in the CPIT itself.

The Producer 230 processes the Interest and returns the requested Data to the Forwarder 220 in a conventional manner, in step S340.

Upon reception of the Data, the Forwarder 220 retrieves the corresponding information, including the condition, the from the CPIT, in step S345. The Forwarder then verifies if the Data fulfils the condition in step S350, as already described for step S320. In case the Data fulfils the condition, the Forwarder 220 forwards the Data to the Consumer 210 in step S355; otherwise, no data is sent to the Consumer 210 and the method ends in step S360.

As can be seen, the CPIT can be said to be a conventional PIT with a conditional table index for each entry (with the possibility of this index being null). The conditional table index can be chosen to be unique for the condition table, but it is also possible to obtain the conditional table index in a different manner, for example by using a hash value generated from the Interest with the condition.

It will be understood that in case no condition is included in the Interest (i.e. when there is no condition to extract by the Forwarder 220), the Forwarder 220 then processes the Interest in the conventional manner. In particular, no conditional table index is entered into the CPIT.

As already mentioned, the condition table includes an index and a condition. The condition has one expression, but it can also be separated into an operator and a value.

Examples of operators are equality and operational operators such as for example:

| | | |
|---|---|---|
| == | Equal to | EQU |
| ! = | Not equal to | NEQ |
| > | Greater than | GT |
| >= | Greater than or equal to | GTE |
| < | Lower than | LT |
| <= | Lower than or equal to | LTE |
| >< | In the range X-Y | RNG |
| +- | X ± Y | DLT |

An example of a CPIT according to the present principles is the following:

| **Prefix** | **Requesting face** | **Condition table index** |
|---|---|---|
| /home1 /exterior/particle_matter | Consumer 210 | 10 |
| /home1 /kitchen/temperature | Consumer XX | - |
| /home1 /exterior/ozone | Home2 | 16 |

A matching example of a condition table is the following:

| **Index** | **Operator** | **Value** |
|---|---|---|
| 10 | > ("GT") | 10 |
| 16 | < ("LT") | 60 |

The system in Figure 2 included a single Forwarder, but the skilled person will appreciate that it naturally is possible for the system to include a plurality of Forwarders. In such a system, a Forwarder without direct contact with the Producer would transmit the Interest to another Forwarder 'closer' to the Producer. An Interest would thus be transmitted from Consumer to Producer via a chain of Forwarders. It is preferred that the Data is sent back through the Forwarders in the opposite direction.

In case a conditional Interest is sent through a chain of Forwarders, various solutions exists for which Forwarder is to check the condition.

A first solution is to have each Forwarder to check the condition before routing the Data towards the Consumer.

A second solution is to have the Forwarder that is closest to the Consumer check the condition. This can for example be achieved by having this Forwarder remove the condition from the Interest before transmission to the next Forwarder that then would handle the received Interest in the conventional manner. Another way of achieving this is for the other Forwarders to ignore the condition when returning the Data towards the Consumer. A drawback of this solution is that the Data is sent from the Forwarder closest to the Producer to the Forwarder closest to the Consumer even when the Data does not fulfil the condition. On the other hand, an advantage is that the Forwarder closest to the Consumer then stores the Data in the CS from which the Data can be retrieved in response to further received Interests.

A third solution is to have only the Forwarder that directly sends the Interest to the Producer check the condition. After all, if this Forwarder finds that the condition is fulfilled, all the Forwarders will come to the same conclusion. Conversely, if the Forwarder finds that the condition is not fulfilled, then it will not return any data at all (or possibly an indication that the condition was not fulfilled) to the next Forwarder, which then cannot verify the condition.

In a fourth solution, each Forwarder that stores the condition first verifies if the load on its resources (for example processor use) is too big, i.e. above a threshold. If the load is above the threshold, then the Forwarder forwards the Data towards the next Forwarder in the chain of Forwarders without checking the condition. While this solution can be implemented also on the Forwarder closest to the Consumer, it is preferred that this Forwarder always checks the condition to determine if the Data should be forwarded to the Consumer. Thus, if all intermediate routers are too busy to check the condition, the condition will be checked by the Forwarder closest to the Consumer.

Depending on the solution, a Forwarder can include the condition in the Interest it sends to another Forwarder, or remove the condition before transmission.

### Use case example

Imagine that a user has a principal residence Home2 and a secondary residence Home1 and that Home1 shares air quality data such as particle matter or ozone. The user, in Home2, wants to obtain relevant data, meaning data that satisy certain conditions as follows:
- particle_matter2.5 if it is greater than 25, and
- ozone when a measured value is lower than 60.

A Consumer device such as the user's smartphone in Home2 may then transmit the following Interests:
- /home1/exterior/particle_matter2.5/GT/25
- /home1/exterior/ozone/LT/60

These Interests may for example be sent to a gateway in Home2 for transmission, possibly routed via further ICN compatible Forwarder nodes to the Producer, i.e. the device or devices that advertises the corresponding Data.

In case the receiving Forwarder stores the requested data and this data meets the condition, it is returned to the Consumer.

Otherwise, the Forwarder extracts the condition, if any (as there are in this example), and creates a new entry in the condition table with an index, say 16, an operator, say LT and a value, say 60. The Forwarder also creates an entry in the CPIT with the Interest, e.g. "/home1/exterior/ozone", the face and the condition table index, say 16. Then the Forwarder routes the Interest to the next ICN node: another Forwarder node on the route to the Producer, or the Producer that advertised the Data, i.e. for example an ozone sensor or a gateway in Home1.

In the end, a Producer will return the requested Data to the Forwarder from which it received the Interest.

The Forwarder will then check if a corresponding condition exists, i.e. that the value is not null; in this user case example there are conditions for both particle matter and ozone. The Forwarder then checks if the data satisfy the condition and, if this is the case, routes the Data towards the Consumer, i.e. either the Consumer or another Forwarder on the route towards the Consumer.

As will be appreciated, the present embodiments can improve network efficiency as unwanted network traffic, i.e. traffic corresponding to data that do not satisfy the condition, is not sent through the network.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces.

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and non-volatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

## Claims

1. A Forwarder device (220) configured for use in a network (200), the Forwarder device (220) comprising:
at least one communication interface (223) configured to:
receive a first request for data from a Consumer device (210) or a second Forwarder device, the first request comprising an identifier of requested data and a condition;
send a second request for the data to a Producer device (230) or a third Forwarder device in the network (200), the second request comprising at least the identifier of the data;
receive data corresponding to the requested data from the Producer device (230) or the third Forwarder device; and
send the received data to the Consumer device (210) or the second Forwarder device; and
at least one hardware processor (221) configured to:
instruct the at least one communication interface (223) to send the received data to the Consumer device (210) only in case the received data satisify the condition.

2. The Forwarder device (220) of claim 1, further comprising memory (222) configured for storing received data, wherein the at least one hardware processor (221) is further configured to retrieve the received data corresponding to the requested data from the memory (222) if stored therein and to send the retrieved data to the Consumer device (210) or the second Forwarder device only in case the retrieved data satisify the condition.

3. The Forwarder device (220) of claim 1, wherein the at least one hardware processor (221) is further configured to store the first request in the memory (222).

4. The Forwarder device (220) of claim 3, wherein the at least one hardware processor (221) is further configured to associate the first request with a timer and to remove the first request from the memory (222) upon expiry of the timer.

5. The Forwarder device (220) of claim 1, wherein the second request further comprises the condition.

6. The Forwarder device (220) of claim 1, wherein the at least one hardware processor (221) is further configured to send to the Consumer device (210), in case the received data does not satisfy the condition, a notification that the condition is not satisfied.

7. The Forwarder device (220) of claim 1, wherein the at least one hardware processor (221) is further configured to determine if the received data satisfy the condition only if the Forwarder device (220) received the first request from the Consumer device (210).

8. The Forwarder device (220) of claim 1, wherein the at least one hardware processor (221) is further configured to determine if the received data satisfy the condition only if the Forwarder device (220) sent the second request to the Producer device (230).

9. A method at a Forwarder device (220) in a network (200), the method comprising:
receiving (S310), by at least one communication interface (223), a first request for data from a Consumer device (210) or a second Forwarder device, the first request comprising an identifier of requested data and a condition;
sending (S335), by the at least one communication interface (223), a second request for the data to a Producer device (230) or a third Forwarder device in the network (200), the second request comprising at least the identifier of the data;
receiving (S340), by the at least one communication interface (223), received data corresponding to requested data from the Producer device (230) or the third Forwarder device;
determining (S350), by at least one hardware processor (221), whether the received data satisfy the condition; and
send (S355) the requested data to the Consumer device (210) or the second Forwarder device only in case the received data satisify the condition.

10. The method of claim 9, further comprising:
retrieving (S315), by the at least one hardware processor (221), retrieved data corresponding to the requested data from memory (222) if stored therein;
determining (S320), by at least one hardware processor (221), whether the retrieved data satisfy the condition; and
sending (S325) the retrieved data to the Consumer device (210) or the second Forwarder device only in case the retrieved data satisify the condition.

11. The method of claim 9, further comprising storing (S330), by the at least one hardware processor (221), the first request in memory (222).

12. The method of claim 9, wherein the second request further comprises the condition.

13. The method of claim 9, further comprising sending to the Consumer device (210), in case the received data do not satisfy the condition, a notification that the condition is not satisfied.

14. Computer program comprising program code instructions executable by a processor for implementing the steps of a method according to any one of claims 9 to 13.

15. Computer program product (240) which is stored on a non-transitory computer readable medium and comprises program code instructions executable by a processor for implementing the steps of a method according to any one of claims 9 to 13.
